# EUROPEAN PATENT SPECIFICATION

(11) **EP 3 735 768 B1**
(45) Date of publication and mention of the grant of the patent: **30.11.2022**
(21) Application number: 18709093.1
(22) Date of filing: 29.01.2018
(51) Int. Cl.: H04L 65/80, H04L 65/612

(54) **IMPROVING QOE FOR VIDEO AND WEB SERVICES USING CROSS-LAYER INFORMATION**
QOE-VERBESSERUNG FÜR VIDEO- UND WEBDIENSTE UNTER VERWENDUNG VON SCHICHTÜBERGREIFENDEN INFORMATIONEN
AMÉLIORATION DE QOE POUR SERVICES VIDÉO ET WEB GRÂCE À DES INFORMATIONS ENTRE COUCHES

(43) Date of publication of application: 11.11.2020
(73) Proprietor: HUAWEI TECHNOLOGIES CO., LTD., Shenzhen, Guangdong 518129 (CN)
(72) Inventor: KOVKOV, Dmitry Valerievich, Shenzhen, Guangdong, 518129 (CN); TANG, Suwen, Shenzhen, Guangdong, 518129 (CN); KHOROV, Evgeny Mikhailovich, Shenzhen, Guangdong, 518129 (CN); KIRYANOV, Anton Gennadievich, Shenzhen, Guangdong, 518129 (CN); KROTOV, Alexander Vitalievich, Shenzhen, Guangdong, 518129 (CN); SHMELKIN, Dmitri Alfredovich, Shenzhen, Guangdong, 518129 (CN)
(74) Representative: Isarpatent
(86) International application number: PCT/RU2018/000042
(87) International publication number: WO 2019/147157

(56) References cited:
- WO-A1-2016/204815
- "Universal Mobile Telecommunications System (UMTS); LTE; Study on Server And Network-assisted Dynamic Adaptive Streaming over HTTP (DASH) (SAND) for 3GPP multimedia services (3GPP TR 26.957 version 14.1.0 Release 14)", ETSI TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. 3GPP SA, no. V14.1.0 10 April 2017 (2017-04-10), pages 1-54, XP014291025, Retrieved from the Internet: URL:http://www.etsi.org/deliver/etsi_tr/12 6900_126999/126957/14.01.00_60/tr_126957v1 40100p.pdf [retrieved on 2017-04-10]

## Description

### BACKGROUND

The present invention, in some embodiments thereof, relates to media streaming and, more specifically, but not exclusively, to cross-layer interaction in a media streaming process.

WO 2016/204815 A1 describes a network device or a client device operating over various interfaces according to a dynamic adaptive streaming over hypertext transfer protocol (DASH) assisting network element (DANE). A media path interface delivers streaming media content to the client device from the media origin server based on a set of parameters provided via a DANE server interface. A client-to-DANE interface receives a set of metric and status messages from the client device concurrent with a delivery of the streaming media content. A content adaptation component generates a modification of a media presentation or related parameters based on the set of metric and status messages.

The document "Universal Mobile Telecommunications System (UMTS); LTE; Study on Server And Network-assisted Dynamic Adaptive Streaming over HTTP (DASH) (SAND) for 3GPP multimedia services" (3GPP TR 26.957 version 14.1.0 Release 14) describes Streaming enhancements via intelligent caching, processing and delivery optimizations on the server or network side, based on feedback from clients on anticipated DASH Segments, accepted alternative DASH Representations and Adaptation Sets, and requested bandwidth.

Cross-layer interaction in a media streaming process has great benefits, in particular for web and adaptive video streaming applications, when network streaming nodes are made aware of content parameter (for example web-page, object, file, bitrate and quality) from an application layer, while applications are made aware of channel conditions and current network load directly from the network streaming nodes. Without cross-layer information, the behavior of an application and network resources is not coordinated, for example application level rate adaptation is held without taking into account current network state and resources are assigned based only on current requirements and historical records.

Exchange of such cross-layer information between different network nodes, is usually based on a control protocol. For example, cross-layer information is used in protocols such as ISO/IEC 23009-1:2014: " Information technology - Dynamic adaptive streaming over hypertext transfer protocol (HTTP) (DASH) - Part 1: Media presentation description and segment formats", referred to as MPEG DASH. The MPEG DASH provides formats that are suitable to stream segmented media content over HTTP. DASH clients follow a client-pull paradigm by adapting their requests based on the available bandwidth and other local resources. The client-driven and decentralized nature of DASH leads to limits the amount of control and coordination between the client and server and/or network behaviors leading to suboptimal streaming performance. For instance, service providers may not have influence over the DASH client behavior and may not have the means to share network-level information to assist the client's adaptation logic, which may end up increasing the amount of re-buffering. Moving Picture Experts Group (MPEG) Server and Network Assisted (DASH) SAND aims to enable better cooperation between the DASH client and server operations, and provides the standardized interfaces toward realizing the following benefits for streaming services: Streaming enhancements via intelligent caching, processing and delivery optimizations on the server and/or network side, based on feedback from clients on anticipated DASH Segments, accepted alternative DASH Representations and Adaptation Sets, and requested bandwidth, improved adaptation on the client side, based on network/server-side information such as cached Segments, alternative Segment availability, and network throughput/QoS.

The SAND architecture is based on four broad categories of elements: i) DASH streaming clients, referred to herein also as user equipment (UEs) or clients, ii) regular network elements (RNEs), which are DASH content unaware and treat DASH-related video delivery objects as any other object, but are present on the path between origin server, for brevity referred to herein as a server, and DASH clients, for example transparent caches. iii) DASH-Aware Network Elements (DANEs), which have at least minimum intelligence about DASH; for instance, they may be aware that the delivered objects are DASH formatted objects such as the MPD or DASH segments, and may prioritize, parse or even modify such objects, and iv) Metrics server, which are DASH aware and are in charge of gathering metrics from DASH clients.

In an exemplary media distribution process which may be executed in a SAND architecture, a server, a network UE device, and one or more Quality of Experience helper nodes (QoEHNs) such as domain name service (DNS)-based Authentication of Named Entities (DANEs) are used, as well as one or more controlling nodes through which traffic between the server and the network UE passes. The controlling node(s) may manage this traffic and may be controlled by the DANE(s). For example such a node may be eNodeB in a long term evolution (LTE) network. In simplest case, the node is a DANE and in others the node is different from the DANE.

The traffic is a transmission control protocol (TCP) and/or a user datagram protocol (UDP) based flow having internet protocol (IP) headers. Each IP header is an envelope encapsulating a TCP header which in turn encapsulates application-dependent data. TCP packets may be referred to herein as segments. A TCP and/or an IP header contain several fields which may be used in a connection matching. The fields are source IP address (belongs to IP header), destination IP address (in IP header), source port and destination ports (both in TCP header), Sequence field (SEQ, in TCP header), acknowledgement (ACK) field (in TCP header), synchronize (SYN) flag, and ACK flag (bits in TCP header). A standard TCP connection startup, also referred to as a 3-way handshake, consists of the following steps:
1. Network UE selects a random number A and sends a TCP segment with a SYN flag set and a number A in SEQ field to the server.
2. The server receives the segment from step 1, selects random number B. The server sends a TCP segment with number B in SEQ field, number A+1 in ACK field, SYN and ACK flags are set. The segment is sent to the network UE.
3. The network UE receives the segment from step 2, it sends to the server a TCP segment with number B+1 in ACK field, and ACK flag set, and SYN flag unset. The SEQ field is set to A+1.

After the 3-way handshake completes, the network UE considers the established connection as open and sends and/or receives data to and/or from the respective server. The first three segments in that exchange contain no TCP payload (only headers are filled, data portion of TCP segment is zero size).

Such control protocols suffer from inefficient data transfer and suboptimal QoE when employed for web and adaptive video streaming applications.

### SUMMARY

The invention is defined by the appended set of claims.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a flowchart of a server side method for establishing a TCP/UDP based connection between a server and a network UE using TCP initial sequence numbers (ISNs) or a quick user datagram protocol (QUIC) connection identifier (ID), according to some embodiments of the present invention;
FIG. 2 is a schematic illustration of a media distributing network, according to some embodiments of the present invention;
FIG. 3 which is a flowchart of a UE side method for establishing a TCP/UDP based connection between a server and a network UE using TCP initial sequence numbers (ISNs) or a quick user datagram protocol (QUIC) connection identifier (ID), according to some embodiments of the present invention;
FIG. 4 is a flowchart of a process of a QoEHN side method for establishing a TCP/UDP based connection between a server and a network UE using TCP ISNs or QUIC Connection ID, according to some embodiments of the present invention;
FIG. 5 is a sequence diagram showing an exemplary exchange of messages between a UE, a server and a DANE, according to some embodiments of the present invention;
FIG. 6A is an initial CWND management workflow, according to some embodiments of the present invention;
FIG. 6B is a graph showing simulation results; and
FIG. 7 is a schematic illustration of an exemplary object tree for a web page, according to some embodiments of the present invention.

### DETAILED DESCRIPTION

The present invention, in some embodiments thereof, relates to media streaming and, more specifically, but not exclusively, to cross-layer interaction in a media streaming process.

As indicated above, embodiments of the invention described herein provide solutions to problem emanated from exchanging of cross-layer information between different network nodes. Some embodiments of the present invention allow matching control information and data connection for distinguishing between flows without establishing a control connection which is separate from used TCP and/or UDP based flows optionally while NAT gateways are used.

For example, in a network wherein media is distributed between network UEs and servers, a network UE has several connections with one or more servers which need to be managed. When it has several connections with the same server, the network UE can only distinguish them by the source port field, but due to gateway or firewall values seen at controlling node the situation may be completely different. This is the essence of control to connection mapping problem. In particular, as indicated above, the traffic is TCP and/or UDP based flows and the known solutions which are based on controlling nodes allow controlling nodes to distinguish between different flows based on data from source IP, source port, destination IP, and destination port fields of the IP headers. The problem is that any of these fields can be changed when crossing a gateway such as a network address translation (NAT) gateway. The server 201 does not know a network UE address and a network UE port but rather a gateway address and a gateway port of a nearest gateway which updates packet headers. The network UE (and the server) knows real server address and server port. However, even if the network UE includes his address and port into the source IP address and port fields, the gateway and/or firewall between it and the controlling node may change the IP address and port fields, so that different packets originating from the network UE and intercepted by the controlling node may have different source IP address and source port, rewritten by the gateway and/or the firewall.

In some embodiments of the present invention, as further described below, initial sequence numbers and not source IP, source port, destination IP, and destination port fields are used for distinguishing between different flows.

Furthermore, some embodiments of the present invention allow server-side network assistant discovery of a QoEHN without a designated control connection between a network UE and an intermediate network node such as the QoEHN or a designated control connection between a server and the intermediate network node. This allows selecting a optimal TCP initial congestion window (CWND) value for accelerating a download.

Furthermore, some embodiments of the present invention allow providing an initial CWND recommendation. After an establishment of a connection between a server and an intermediate network node it is possible to exchange control information between them in order to enhance Quality of Experience (QoE) for an end user using a respective network UE. This may be done by accelerating TCP slow start phase by calculating an optimal TCP initial CWND value at the server, based on the information obtained from intermediate nodes via a control connection. The information may contain capacity of a wireless link in an LTE network, which is supposed to be a bottleneck.

Furthermore, some embodiments of the present invention allow obtaining sizes of distributed media content such as web-pages and/or objects and/or files at intermediate nodes by utilizing information about sizes of the distributed media content requested by the network UE to perform optimal scheduling among different network UEs in terms of some utility function (for example, download time, download rate, and/or the like). As a distributed media content requested by a network UE usually consists of multiple objects located at different servers, it is not possible to know a total size in advance just after the main object of the distributed media content is requested (for example in a distributed media content such as a webpage). In some embodiments of the present invention, the problem of informing a controlling node about the total size of distributed media content originated from multiple separate servers is solved.

Furthermore, some embodiments of the present invention allow providing information about video resolution, for instance for adaptive video streaming applications. In particular, quality of user experience is improved and network resources are utilized more efficiently. A quality of the user experience may be a function of a resolution and stalling event prevalence. While sharing channel resource between several video users (for example users running adaptive video streaming applications), it is necessary to take into account not only the bitrate or bandwidth of each operation point available for the user but also the resolutions of available operation points. It is the resolution that determines the QoE for a video user rather than bitrate. Since different types of videos (for example, with high or low motion) have different bitrates for the same resolution, for user satisfaction it is more beneficial to make scheduling decisions based on resolution.

Furthermore, some embodiments of the present invention allow maintaining optimal playback buffer volume by dynamically changing the volume of the playback buffer volume. Network UE's application often has a limitation on a playback buffer and stops requesting new segments when the limitation is reached; however, in several situations increasing the playback buffer volume improves performances, for example when channel conditions are about to degrade when a cellular network UE enters a low quality reception area such as a tunnel with poor or no coverage. To avoid stalling or watching low-quality video while being in the tunnel, some embodiments of the present invention describe how to maintain a dynamic playback buffer volume to accumulate more playback buffer in advance when a future low quality reception area is estimated.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example through the Internet using an Internet Service Provider). In some embodiments, electronic circuitry including, for example programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

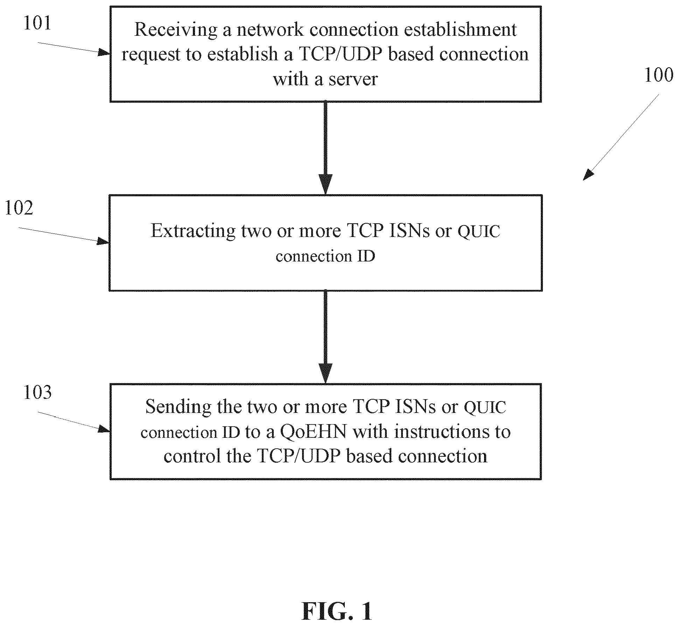

Reference is now made to FIG. 1 which is a flowchart of a server side method 100 for establishing a TCP based connection or a UDP based connection between a server and a network UE using TCP initial sequence numbers (ISNs) or a quick user datagram protocol (QUIC) connection identifier (ID), according to some embodiments of the present invention. The method is executed using server hardware, for instance processor(s) and network interface(s) such as network interface card(s).

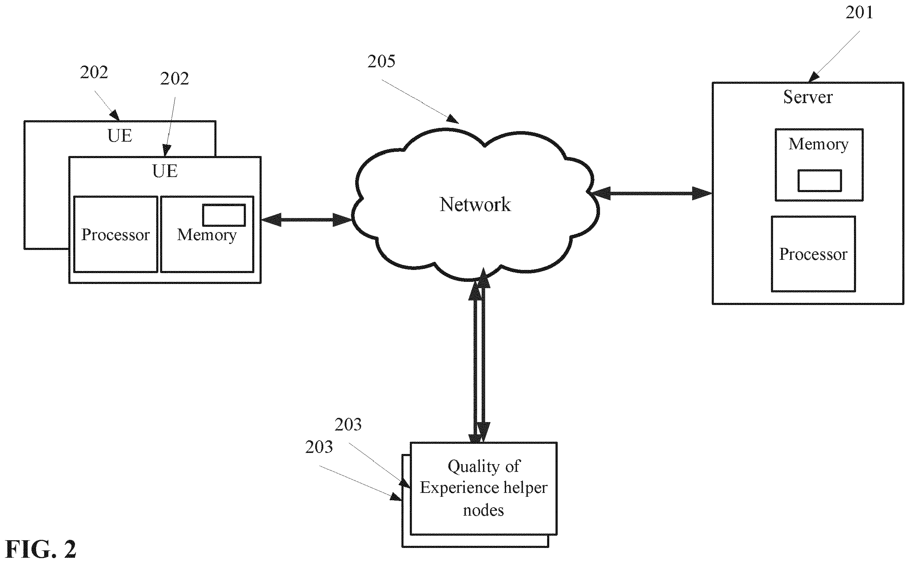

Reference is also made to FIG. 2 which is a schematic illustration of actors including a server 201, a UE, referred to interchangeably as a client, 202, and one or more Quality of Experience helper nodes, QoEHNs, such as DANEs, 203, communicating while implementing the processes described with reference to FIGs. 1, 3, and 4. The actors 201-203 are connected to a network 205 such as a wide area network (WAN). Each one of the actors includes one or more memories for hosting a code for performing the respective processes described herein, one or more processors and/or one or more network interface(s) for executing the following. As used herein, the UE or the client may be any digital content consumer, for a laptop, a smartphone, a tablet, a server, a desktop and/or the like.

As depicted in FIG. 1, in 101, a network connection establishment request to establish a TCP based connection or a UDP based connection is received from a network UE over a network 205.

As shown at 102, the network connection establishment request is analyzed to extract at least one of the two TCP ISNs or QUIC Connection ID. The TCP ISNs or QUIC Connection ID may be extracted from a *TCP SYN* packet and/or *TCP SYN*+*ACK* packets as described below.

Now, as shown at 103, at least one of the two TCP ISNs or QUIC Connection ID are sent to a QoEHN such as a DANE or a helper that improves web traffic transmission, with instructions to control the TCP based connection or the UDP based connection between the server 201 and the network UE 202. Optionally, the QoEHN is discovered using an internet protocol (IP) address found in a packet received from the UE, for instance by using a domain name server, DNS. For example the server 201 (or the client as described below) may discover available services for a given service type using a query for a DNS SRV record with a name of a predefined form such as "<*Service*>*.* <*Domain*>" *or* "<*Service*>. <*IP*>"*.* Response for such a query contains a set of IP addresses and ports corresponding to this service. For server-side network assistant discovery, the server 201 finds a network assistance service IP and port via DNS query. For that, the server 201 (or the UE) issues a DNS query of the form "_*network-assistance.* _*tcp.*<*IP*> ", *where* <*IP*>*"* is replaced with the source IP address indicated in the IP header of the packets received from the client. After the receipt of response for the DNS query, the server 201 may use the received IP address and port corresponding to DANE for establishing a control connection.

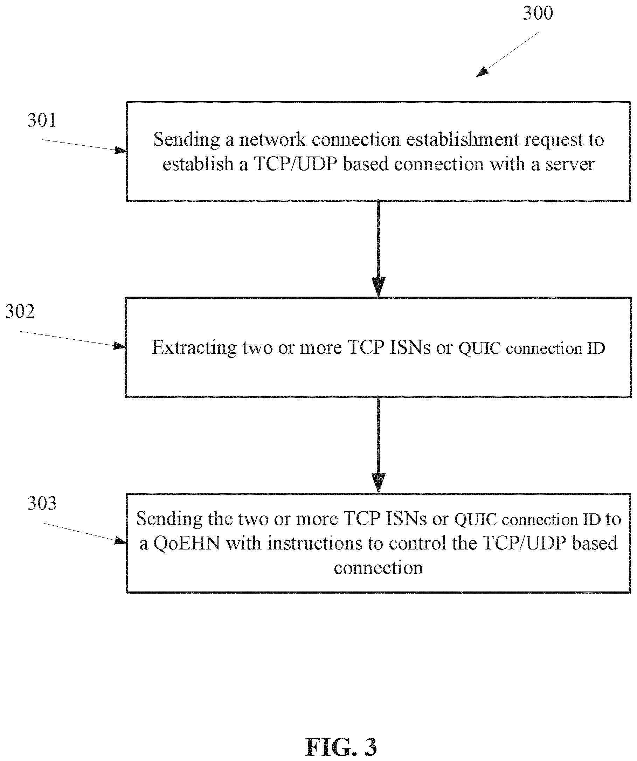

Reference is also made to FIG. 3 which is a flowchart 300 of a UE side method for establishing a TCP based connection or a UDP based connection between server 201 and the network UE 202 using TCP ISNs or QUIC Connection ID, according to some embodiments of the present invention, for example in a network as depicted in FIG. 2, for instance instead of a server executing the method described in FIG. 1 for establishing this TCP based connection or this UDP based connection. The UE includes one or more processors and/or one or more network interface(s) for executing the following. The method is executed using UE hardware, for instance processor(s) and network interface(s) such as network interface card(s).

First, as shown at 301, a network connection establishment request is sent to establish a TCP based connection or a UDP based connection to the server 201 via the network.

As shown at 302, a data flow, such as a network connection establishment sequence of segments is analyzed to extract at least one of the two TCP ISNs or a QUIC Connection ID, for example as outlined above at 102 and described below. As shown at 303, at least one of the two TCP ISNs or a QUIC Connection ID is sent to a QoEHN such as a DANE with instructions to control the TCP based connection or the UDP based connection between the server and the network UE.

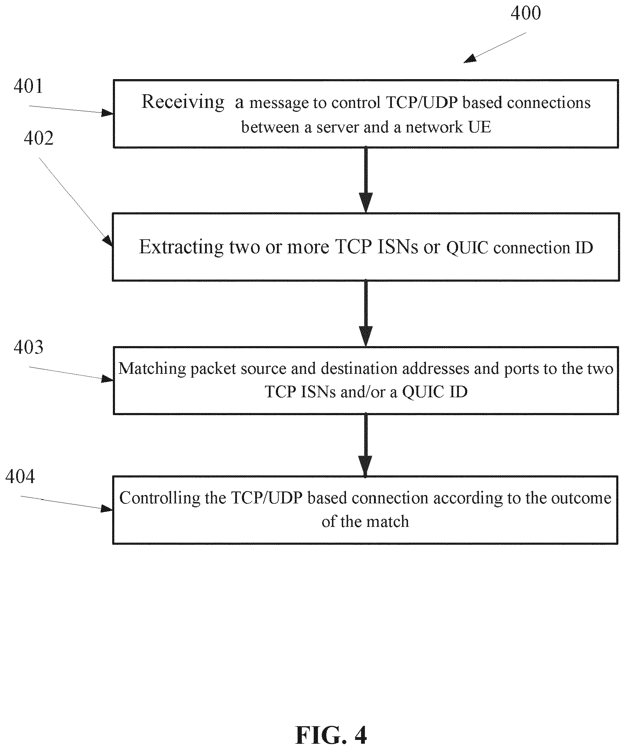

Reference is now made also to FIG. 4 which is a process of a QoEHN side method 400 for establishing a TCP based connection or a UDP based connection between a server and a network UE using TCP ISNs or QUIC Connection ID, according to some embodiments of the present invention, for example in a network as depicted in FIG. 2, for instance when the server executes the method described in FIG. 1 and/or the client executes the method described in FIG. 2 for establishing this TCP based connection or this UDP based connection. The QoEHN includes one or more processors and/or one or more network interface(s) for executing the following. The method is executed using QoEHN hardware, for instance processor(s) and network interface(s) such as network interface card(s).

First, as shown at 401, a message to control a TCP or UDP based connection between a server and a network UE is received from the server and/or the UE. The message includes at least one of the two TCP ISNs or a QUIC Connection ID. The message may be a subscription request comprising the two TCP ISNs or the QUIC CONNECTION ID. Optionally, the message is sent in a data connection between the server and the QoEHN

Now, as shown at 402, the message is analyzed to extract at least one of the two TCP ISNs or a QUIC connection ID. This allows, as shown at 403, matching packet source and destination addresses and ports to the two TCP ISNs and/or a QUIC connection ID.

This allows the QoEHN, as shown at 403, to control the TCP based connection or the UDP based connection according to the outcome of the match.

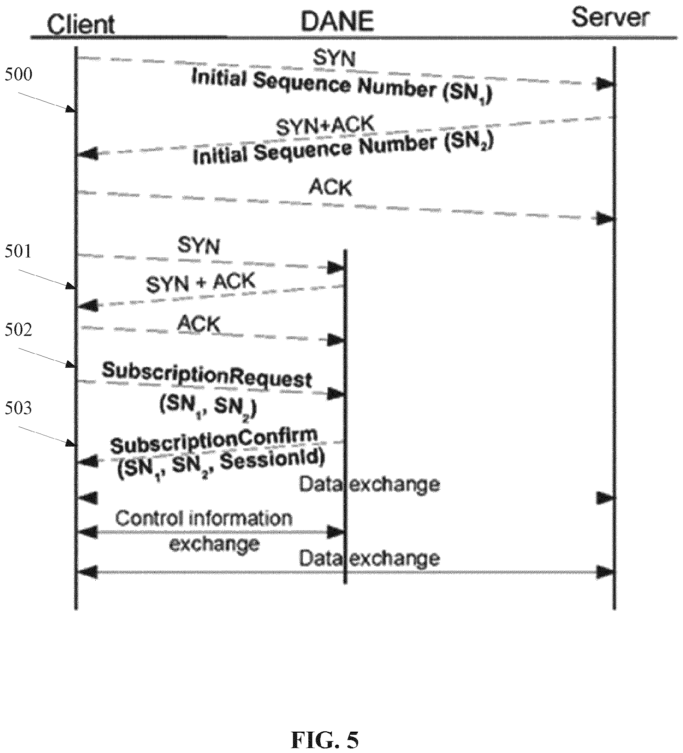

For example reference is now made to FIG. 5 which is a sequence diagram showing an exemplary exchange of messages between a UE, a server and an exemplary QoEHN, DANE, for managing a server-UE connection based on a match between control information and data connection. When an application executed on the UE requires a network resource, a request to establish a control connection is transmitting to a QoEHN, for example a *SubscriptionRequest* message designated to a DANE as shown at 502. The *SubscriptionRequest* message includes pair of TCP ISNs or QUIC Connection ID acquired during an establishment of a corresponding TCP data connection as shown at 500. Having received these initial TCP sequence numbers (or QUIC Connection ID) DANE shall be able to match them to a data connection established between the UE and the server. For TCP based data connection, DANE records the TCP ISNs that are used while establishing each TCP based connection between a server and a UE for at least a time period, for instance recordHoldTimeout time period. As TCP ISNs are transmitted within TCP SYN and *TCP SYN*/*ACK* packets, the DANE optionally analyzes TCP SYN and *TCP SYN*/*ACK* packets and makes a record with correspondence between ISNs and a 4-tuple of IP addresses and ports, as shown at 501. This allows the DANE to make a record after a receipt of *TCP SYN*/*ACK* message as such a message contains information about both TCP ISNs. The record is optionally stored for recordHoldTimeout time period after the correspondence is established, where recordHoldTimeout may be implementation dependent. For example, recordHoldTimeout is set to provide a low sequence number collision probability and is long enough to allow receiving a *SubscriptionRequest* message, for instance recordHoldTimeout is about 1 second or more.

When the requested connection to establish is a QUIC data connection, the DANE records the QUIC Connection ID used while establishing each QUIC connection between a server and a UE for at least recordHoldTimeout. In order to do so, the DANE parses the first 2 UDP packets sent from the server side on each new UDP based connection trying to find QUIC Connection ID. When one of the packets contains QUIC Connection ID, the DANE shall make a record with correspondence between QUIC Connection ID and the 4-tuple of IP addresses and ports. The record shall be kept for recordHoldTimeout time period after the correspondence is established.

As shown at 502, when the DANE receives a *SubscriptionRequest* message containing TCP ISNs or QUIC Connection ID that may be found in a unique record at the DANE, it generates a random *SessionID* and responds with a SubscriptionConfirm message, which contains generated *SessionID,* 503. The process for generating *SessionID* may vary as it is implementation dependent. For example the DANE concatenates TCP ISNs and used as a unique session identifier. After reception of SubscriptionConfirm message both the end point and DANE are able to match *SessionID* to a data connection (either TCP or QUIC). When the DANE receives a *SubscriptionRequest* message containing TCP initial sequence numbers or QUIC Connection ID that may be found in more than one record at DANE or cannot be found in any record at DANE, then DANE generates a SubscriptionReject message.

According to some embodiments of the present invention, server-side network assistant discovery of a QoEHN is facilitated without a designated control connection between a network UE and the QoEHN or a designated control connection between a server and the QoEHN intermediate network node. This allows selecting optimal TCP initial congestion window (CWND) value for accelerating a download. In use, the DANE may estimate an available bandwidth based on a current load and channel quality and send a *CwndRecommendation* message to the server and preferably an upper bound *CWNDmax* of initial congestion window. In such embodiments, the TCP based connection or the UDP based connection may be managed according to an optimal initial congestion window and optionally a Slow Start threshold calculated by the server based on the received *CwndRecommendation* and preferably the upper bound *CWNDmax.*

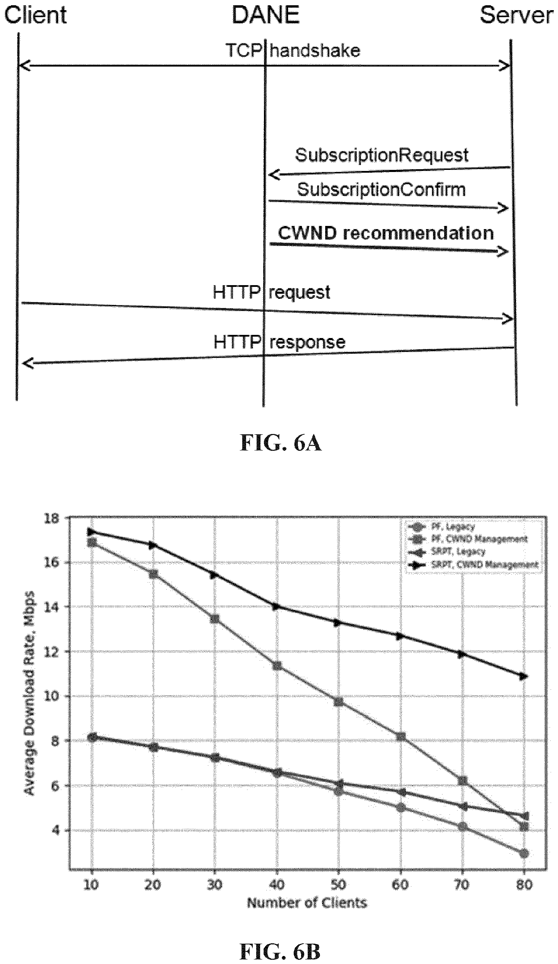

A TCP Slow Start procedure allows for estimating the channel capacity during the data transmission; however, this procedure may be slow and may cause a significant delay. Especially such a delay is notable for small webpages and files, for example webpages and files having a storage size which is smaller than end-to-end link bandwidth-delay product and higher than initial CWND, which is typically about 15 kB as the period when the channel is underutilized is relatively significant. DANE may inform the server about an available bandwidth for the considered connection and, hence, contribute to set an appropriate congestion window without long Slow Start procedure. Specifically, the QoEHN, for example a DANE, estimates the available bandwidth B based on a current load and a channel quality and sends the *CwndRecommendation* message to the server. Besides B, the message may contain an upper bound *CWNDmax* of initial congestion window which may be set at the server for the considered connection. The upper bound may exist, for example as a buffer limitation at network nodes. After the receipt of this message, the server estimates an optimal initial congestion window, for instance by calculating a round-trip time (RTT) based on *SYN*/*ACK* packets and sets initial congestion window (CWND) as follows: CWND = min(B RTT, *CWNDmax).* In order to finish the Slow Start procedure and start Congestion Avoidance, the server may also set a slow start threshold to the CWND. Exemplary workflow of initial CWND management is shown in FIG. 6A.

Optionally, the server executes an application interfacing with the operating system (OS). In such a manner, after setting initial congestion window and a slow start threshold and obtaining the estimation of RTT based on *TCP SYN*/*ACK* packet, upon receipt of CWND recommendation, the application may obtain a current estimation of RTT from the OS to calculate an appropriate value for the initial congestion window. Then, the application sets the TCP initial congestion window and slow start threshold to the calculated value, for example, min(B·RTT, *CWNDmax*)*.* When CWND recommendation is received after the congestion window initialization, for example during the active data transmission, the application behavior is implementation dependent. For example it may ignore the received message or set the current congestion window and slow start threshold to min(B·RTT, *CWNDmax*) when this value is greater than the current congestion window.

When DANE receives a *SubscriptionRequest* from the server, the DANE estimates the amount of channel resource which may be used by the new TCP connection based on the load, channel quality, and the number of active sessions. The exact algorithm for estimation is implementation dependent. For example DANE assumes that all resources are used for data transmission and estimates available bandwidth B as maximal data rate obtained in the whole band in a sliding time window. Then, the DANE sends CWND recommendation to the server. Besides B, this message contains the upper bound of initial congestion window *CWNDmax,* which may correspond to buffer limitations at network nodes.

The above CWND management improves TCP slow start phase by estimating the optimal initial CWND. The above proposed process greatly speeds up the delivery of Web-paged and files. Simulation results for download rate in the LTE network are presented in FIG. 6B. The results are given for Proportional Fair (PF) and Shortest Remaining Process Time (SRPT) schedulers with legacy CWND value (10 MSS, Maximum segment size) and CWND management as described above. As it can be seen the achievable gain in the average download rate exceeds 100%.

According to some embodiments of the present invention, the QoEHN, for example a DANE, estimates sizes of distributed media content such as web-pages and/or objects and/or files by utilizing information about sizes of the distributed media content requested by the network UE to perform optimal scheduling among different network UEs in terms of some utility function (for example, download time, download rate, and/or the like). As a distributed media content requested by a network UE usually consists of multiple objects located at different servers, it is not possible to know a total size in advance just after the main object of the distributed media content is requested (for example in a distributed media content such as a webpage). In some embodiments of the present invention, the problem of informing a controlling node about the total size of distributed media content originated from multiple separate servers is solved.

Optionally, the QoEHN receives a uniform resource locator (URL) of an object requested in the TCP based connection or the UDP based connection and/or the hash digest of this URL and the size of an object. Then, the QoEHN receives a URL of a parent object requested in the TCP based connection or the UDP based connection and/or the hash digest of this URL. Now, the URL and the size are used for treating the object with other objects in a common web-page or constructing a web-page object tree using parent object URL or its digest.

In particular, when the *ObjectSize* is a DANE and the server receives an HTTP request for a certain object from a client, it sends to the DANE an *ObjectSize* message, which contains *SessionID* and the following one or more of the following (the requested object) :
a size of the requested object, optionally in bytes;
an indicator, such as a *IsMainObject* flag, set true when the requested object is the main object of a Web page or false otherwise;
*N* most significant bytes of SHA-256 hash of the URL to the requested object; and
N most significant bytes of SHA-256 hash of the URL indicated in a referrer field of HTTP request header.

When the server does not have information about the type (main/embedded) of the requested object, the object type is marked, optionally according to a policy. For example the server may consider the object as the main object of the Web page when its content type is *'text*/*html'* and HTTP request does not contain the header *'X-Requested-With'* in order to take into account objects requested with asynchronous JavaScript and XML (AJAX). The server sends *ObjectSize* message via control connection on every received HTTP request in order to inform DANE about the size of the requested object. The actual size of the transmitted data may be higher as of protocol overhead and TCP retransmissions. Hence, the server may send additional *ObjectSize* messages in order to inform DANE about overhead caused by TCP retransmissions while the DANE estimates the total overhead. The server application is informed about retransmissions on this connection.

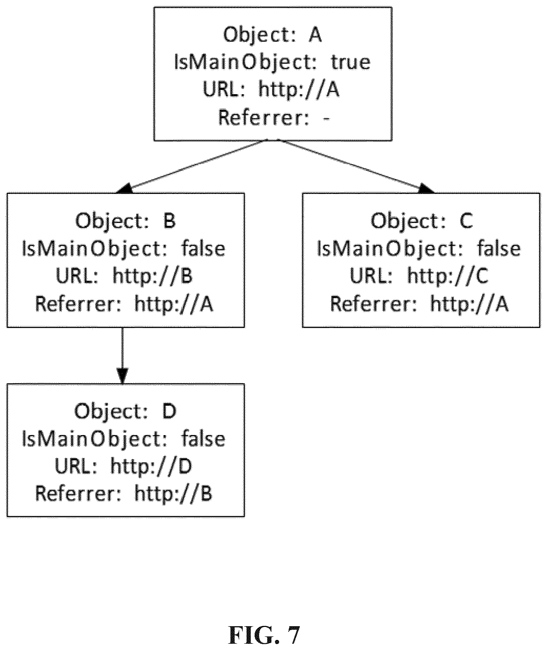

Optionally, the DANE maintains a data structure, which contains information about the total data flow size, remaining data flow size and the flow start time. As Web pages may contain several embedded objects downloading via different TCP connections from different servers, the data structure allows DANE for associating one data flow with a list of several *SessionIDs* corresponding to the same client. For that the DANE optionally uses information from *ObjectSize* messages received from servers. In particular, the fields *IsMainObject,* URL and Referrer are optionally used to build a webpage object tree. For example FIG. 7 is a schematic illustration of an exemplary object tree for a web page consisting of 4 objects. Object A is a main object while objects B, C and D are embedded objects. Each object may be downloaded by different TCP connections and hence objects A, B, C and D can correspond to different *SessionIDs.* Each node in the tree contains URL and Referrer, which are indicated in *ObjectSize* message for the corresponding object. Further we assume that each record in the data structure corresponds to the data flow and contains the list of *SessionIDs,* the total size of the data flow, remaining size and elapsed download time. The record may be deleted after *RecordTimeout* during which the remaining data size for this record does not change. The recommended value for *RecordTimeout* is several minutes, for example, 2, 5, and 10 minutes or any intermediate or longer period.

When a new *ObjectSize* message for the given data flow is received, the DANE updates the information for instance by performing the following: When *IsMainObject* flag in the received *ObjectSize* message is set to true or when there is no matching record, the DANE adds to the data structure a new record which contains *SessionID,* the size of the object, the data flow start time (equals to the time when *ObjectSize* message was generated) and the object tree with the only one node (for example the root of the tree), corresponding to the main object. Otherwise, DANE checks all records which contain *SessionIDs* corresponding to the same client as *SessionID* indicated in the received *ObjectSize* message. When there is a record with an object tree that contains a node *N* with a URL equal to a URL in a referrer field of *ObjectSize* message, the object described by the message is considered as embedded into the webpage corresponding to this record. A new node is attached to the object tree as a child node for node N, the data flow size is increased by the value indicated in *ObjectSize* message corresponding to the size of new object and new *SessionID* is added to the list of *SessionIDs* associated with the record. When several suitable records are found the record with the latest flow start time is chosen.

When data packets corresponding to a certain data flow are transmitted, DANE updates remaining data flow size by subtracting the size of transmitted data. Hence, the DANE identifies the *SessionID* corresponding to each transmitted data packet. For that, the DANE identifies the TCP connection (data flow) corresponding to the transmitted packet and then, using the matching described above, identifies *SessionID.* The way of matching transmitted packets to data flows is implementation dependent. For example, the DANE inspects IP and TCP headers of the packet to identify IP addresses and ports and then matches them with corresponding data flow. After identification of *SessionID,* the DANE searches for a record containing this *SessionID.* When several records are found, DANE chooses the record with the earliest data flow start time with positive remaining data size. For this record, DANE decreases the remaining data size by subtracting the size of the transmitted packet taking into account protocol overhead, for example packet headers. The way of overhead estimating is implementation dependent. For example DANE may consider the size of each protocol header (for example, PDCP, IP, TCP headers) as constant values or may accurately find sizes of these headers for each packet by deep packet inspection. Optionally, the Dane comprises a scheduler that utilizes the information from the data structure and calculates accordingly priorities for different users and/or separate data flows. The scheduling policy may be chosen in such a way that it maximizes some utility function, for example, the average download rate, or minimizes some utility function, for example, the average download time, or any other.

According to some embodiments of the present invention, the format of *SharedResourceAllocation* message which is sent between the server and the QoEHN, for example a DANE, is changed to include a resolution field. The resolution field may be represented as a string which contains width and length of the video separated by "x" symbol. This allows providing information about video resolution, for instance for adaptive video streaming applications for controlling or adapting quality of user experience and/or network resource utilization. A quality of the user experience may be a function of a resolution and stalling event prevalence. Optionally, scheduling decisions for different types of videos (for example, with high or low motion) are taken accordingly.

According to some embodiments of the present invention, the volume of a playback buffer volume used by the UE is dynamically changed. The change to the buffer may be based on a value of a received message that contains an integer representing recommended amount of playback in seconds to be accumulated and kept by the UE. The message may be for example *SandMessage = BufferAccumulationSuggestion.* Such a message may be sent by the cellular network UE when it enters a low quality reception area such as a tunnel with poor or no coverage.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant methods and systems will be developed and the scope of the term a processor, a UE, a server, and a QoEHN is intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example description of a range such as from 1 to 6 should be considered to have specifically disclosed subranges such as from 1 to 3, from 1 to 4, from 1 to 5, from 2 to 4, from 2 to 6, from 3 to 6 and/or the like, as well as individual numbers within that range, for example 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

## Claims

1. A server (201), comprising:
a processor configured to:
receive a network connection establishment request from a network user equipment, UE (202), to establish a Transmission Control Protocol, TCP, connection or a user datagram protocol, UDP, connection;
analyze the network connection establishment request to extract TCP initial sequence numbers, ISNs, or a quick user datagram protocol, QUIC, connection identifier, ID; and
send a message comprising the QUIC connection ID or at least one of the TCP ISNs to a Quality of Experience helper node, QoEHN, (203) with instructions to control the TCP connection or the UDP connection between the server (201) and the network UE (202), wherein the control of the TCP connection or the UDP connection between the server (201) and the network UE (202) comprises matching packet source and destination addresses and ports to the at least one TCP ISNs or the QUIC connection ID and controlling the TCP connection or the UDP connection according to the outcome of the match.

2. The server (201) of claim 1, wherein at least one of the TCP ISNs is extracted from a TCP SYN segment or a TCP SYN+ACK segment.

3. The server (201) of claim 1 or 2, wherein the processor is configured to use an internet protocol address found in a packet received from the UE for discovering the QoEHN (203) using a domain name server (201), DNS, service.

4. The server (201) of one of the preceding claims, wherein the processor is configured to:
extract from a HTTP request header a uniform resource locator, URL, of a requested object in the TCP connection or the UDP connection and to transform the URL into a hash value by using a hash function;
extract a referrer URL of a parent object from HTTP request headers in the TCP connection or the UDP connection;
transform the referrer URL into a hash value by using a hash function; and
update the QoEHN (203) about the size of the object and either the URL or its hash value and either the parent object URL or its hash value.

5. The server (201) of one of the preceding claims, wherein the processor is configured to:
estimate an optimal initial congestion window size (CWND) value according to a capacity of the TCP connection or the UDP connection and a round-trip time, RTT, between the UE and the server (201), whereas the capacity is received in a control message from QoEHN, and
use the CWND to manage the TCP connection or the UDP connection.

6. The server (201) of one of the preceding claims, wherein the processor is configured to:
calculate an appropriate value for a slow start threshold to be used to manage the TCP connection or the UDP connection.

7. A client (202), comprising:
a processor configured to:
send, a network connection establishment request to a server (201), to establish a Transmission Control Protocol, TCP, connection or a user datagram protocol, UDP, connection;
receive, from the server (201), a network connection establishment sequence of packets;
analyze the network connection establishment sequence of packets to extract TCP initial sequence numbers, ISNs, or a quick user datagram protocol, QUIC, connection identifier, ID; and
send a message comprising the QUIC connection ID or at least one of the TCP ISNs to a Quality of Experience helper node, QoEHN (203), with instructions to control the TCP connection or the UDP connection between the server (201) and the client (202),
wherein the control of the TCP connection or the UDP connection between the server (201) and the network UE (202) comprises matching packet source and destination addresses and ports to the at least one TCP ISNs or the QUIC connection ID and controlling the TCP connection or the UDP connection according to the outcome of the match.

8. The client (202) of claim 7, wherein the TCP ISNs are extracted from a TCP SYN+ACK segment.

9. A quality of Experience helper node, QoEHN (203), comprising:
a processor configured to:
receive from at least one server (201) or a network user equipment UE (202), a message to control a Transmission Control Protocol, TCP or user datagram protocol, UDP, connection between the server (201) and the network user equipment, UE (202), the message comprising a quick user datagram protocol, QUIC, connection identifier, ID, or at least one TCP initial sequence number, ISN;
analyze the message to extract the at least one TCP ISNs or the QUIC connection ID;
match packet source and destination addresses and ports to the at least one TCP ISNs or the QUIC connection ID; and
control the TCP connection or the UDP connection according to the outcome of the match.

10. The QoEHN (203) of claim 9, wherein the message is a subscription request comprising the at least one TCP ISN or the QUIC connection ID.

11. The QoEHN (203) of claims 9 or 10, wherein the message is sent in a data connection between the server (201) and the QoEHN.

12. The QoEHN (203) of one of the claims 9 to 11, wherein the processor is configured to:
estimate an available bandwidth based on a current load and channel quality,
send a CwndRecommendation message to the server (201), wherein the message contains the available bandwidth.

13. A server side method (100), comprising:
receiving (101) from a network user equipment, UE (202), a network connection establishment request to establish a Transmission Control Protocol, TCP, connection or a user datagram protocol, UDP, connection;
analyzing (102) the network connection establishment request to extract TCP initial sequence numbers, ISNs, or a quick user datagram protocol, QUIC, connection identifier, ID; and
sending (103) the QUIC connection ID or at least one the TCP ISNs to a Quality of Experience helper node, QoEHN (203) with instructions to control the TCP connection or the UDP connection between the server (201) and the network UE (202),
the control of the TCP connection or the UDP connection between the server (201) and the network UE (202) comprises matching packet source and destination addresses and ports to the at least one TCP ISNs or the QUIC connection ID and controlling the TCP connection or the UDP connection according to the outcome of the match.

14. A network user equipment, UE, side method (300), comprising:
sending (301) a network connection establishment request to establish a Transmission Control Protocol, TCP, connection or a user datagram protocol, UDP, connection to a server (201);
receiving, from the server (201), a network connection establishment sequence of segments;
analyzing (302) the network connection establishment packet sequence to extract TCP initial sequence numbers, ISNs, or a QUIC connection ID; and
sending (303) the QUIC connection ID or at least one of the TCP ISNs to a Quality of Experience helper node, QoEHN (203) with instructions to control the TCP connection or the UDP connection between the server (201) and the network UE (202),
the control of the TCP connection or the UDP connection between the server (201) and the network UE (202) comprises matching packet source and destination addresses and ports to the at least one TCP ISNs or the QUIC connection ID and controlling the TCP connection or the UDP connection according to the outcome of the match.

15. A method (400) for controlling connections between a network user equipment, UE (202) and a server (201), the method being performed at a Quality of Experience helper node, QoEHN (203), the method comprising:
receiving (401) from at least one of the server (201) or the UE (202), a request to establish control of a connection between the server (201) and the UE, the request comprises at least one of the TCP ISNs or the QUIC connection ID;
analyzing (402) QUIC packets or at least one of TCP SYN segments and TCP SYN+ACK segments in a connection establishment exchange sequence between the server (201) and the UE (202) to extract a QUIC connection ID or at least one TCP ISN and record a mapping between QUIC connection ID or at least one TCP ISN, and source and destination addresses and ports;
matching (403) between the TCP ISNs or the QUIC connection ID of the control message and source and destination addresses and ports of passing TCP or UDP packet; and controlling (404) the TCP connection or the UDP connection according to an outcome of the match.

## Patentansprüche

1. Server (201), umfassend:
einen Prozessor, der zu Folgendem konfiguriert ist:
Empfangen einer Netzwerkverbindungsherstellungsanforderung von einer Netzwerkbenutzereinrichtung, UE (202), um eine "Transmission Control Protocol"-, TCP, Verbindung oder eine "User Datagram Protocol"-, UDP, Verbindung herzustellen;
Analysieren der Netzwerkverbindungsherstellungsanforderung, um initiale TCP-Sequenznummern, ISNs, oder eine "Quick User Datagram Protocol"-, QUIC, Verbindungskennung, ID, zu extrahieren; und
Senden einer Nachricht, die die QUIC-Verbindungs-ID oder mindestens eine der TCP-ISNs umfasst, an einen Erlebnisqualitäts-Hilfsknoten, QoEHN, (203) mit Anweisungen zum Steuern der TCP-Verbindung oder der UDP-Verbindung zwischen dem Server (201) und der Netzwerk-UE (202), wobei die Steuerung der TCP-Verbindung oder der UDP-Verbindung zwischen dem Server (201) und der Netzwerk-UE (202) Abgleichen von Paketquell- und -zieladressen und -ports mit der mindestens einen TCP-ISNs oder der QUIC-Verbindungs-ID und Steuern der TCP-Verbindung oder der UDP-Verbindung gemäß dem Ergebnis des Abgleichs umfasst.

2. Server (201) nach Anspruch 1, wobei mindestens eine der TCP-ISNs aus einem TCP-SYN-Segment oder einem TCP-SYN+ACK-Segment extrahiert wird.

3. Server (201) nach Anspruch 1 oder 2, wobei der Prozessor dazu konfiguriert ist, eine in einem von der UE empfangenen Paket vorgefundene Internetprotokolladresse zum Ermitteln des QoEHN (203) unter Verwendung eines Domänennamenserver- (201), DNS, Dienstes zu verwenden.

4. Server (201) nach einem der vorhergehenden Ansprüche, wobei der Prozessor zu Folgendem konfiguriert ist:
Extrahieren, aus einer HTTP-Anforderungskopfzeile, eines "Uniform Resource Locators", URL, eines angeforderten Objekts in der TCP-Verbindung oder der UDP-Verbindung und Umwandeln des URL in einen Hashwert unter Verwendung einer Hashfunktion;
Extrahieren eines Verweiser-URL eines übergeordneten Objekts aus HTTP-Anforderungskopfzeilen in der TCP-Verbindung oder der UDP-Verbindung;
Umwandeln des Verweiser-URL in einen Hashwert unter Verwendung einer Hashfunktion; und
Aktualisieren des QoEHN (203) um die Größe des Objekts und entweder den URL oder seinen Hashwert und entweder den URL des übergeordneten Objekts oder seinen Hashwert.

5. Server (201) nach einem der vorhergehenden Ansprüche, wobei der Prozessor zu Folgendem konfiguriert ist:
Schätzen eines optimalen initialen Überlastungsfenstergrößen(CWND)-Werts gemäß einer Kapazität der TCP-Verbindung oder der UDP-Verbindung und einer Umlaufzeit, RTT, zwischen der UE und dem Server (201), wobei die Kapazität in einer Steuernachricht von dem QoEHN empfangen wird, und
Verwenden des CWND zum Verwalten der TCP-Verbindung oder der UDP-Verbindung.

6. Server (201) nach einem der vorhergehenden Ansprüche, wobei der Prozessor zu Folgendem konfiguriert ist:
Berechnen eines geeigneten Werts für einen Schwellenwert eines langsamen Starts, der zum Verwalten der TCP-Verbindung oder der UDP-Verbindung zu verwenden ist.

7. Client (202), umfassend:
einen Prozessor, der zu Folgendem konfiguriert ist:
Senden einer Netzwerkverbindungsherstellungsanforderung an einen Server (201), um eine "Transmission Control Protocol"-, TCP, Verbindung oder eine "User Datagram Protocol"-, UDP, Verbindung herzustellen;
Empfangen, von dem Server (201), einer Netzwerkverbindungsherstellungssequenz von Paketen;
Analysieren der Netzwerkverbindungsherstellungssequenz von Paketen, um initiale TCP-Sequenznummern, ISNs, oder eine "Quick User Datagram Protocol"-, QUIC, Verbindungskennung, ID, zu extrahieren; und
Senden einer Nachricht, die die QUIC-Verbindungs-ID oder mindestens eine der TCP-ISNs umfasst, an einen Erlebnisqualitäts-Hilfsknoten, QoEHN (203), mit Anweisungen zum Steuern der TCP-Verbindung oder der UDP-Verbindung zwischen dem Server (201) und dem Client (202),
wobei die Steuerung der TCP-Verbindung oder der UDP-Verbindung zwischen dem Server (201) und der Netzwerk-UE (202) Abgleichen von Paketquell- und -zieladressen und -ports mit der mindestens einen TCP-ISNs oder der QUIC-Verbindungs-ID und Steuern der TCP-Verbindung oder der UDP-Verbindung gemäß dem Ergebnis des Abgleiches umfasst.

8. Client (202) nach Anspruch 7, wobei die TCP-ISNs aus einem TCP-SYN+ACK-Segment extrahiert sind.

9. Erlebnisqualitäts-Hilfsknoten, QoEHN (203), umfassend:
einen Prozessor, der zu Folgendem konfiguriert ist:
Empfangen, von mindestens einem Server (201) oder einer Netzwerkbenutzereinrichtung, UE (202), einer Nachricht zum Steuern einer "Transmission Control Protocol"-, TCP, oder "User Datagram Protocol"-, UDP, Verbindung zwischen dem Server (201) und der Netzwerkbenutzereinrichtung, UE (202), wobei die Nachricht eine "Quick User Datagram Protocol"-, QUIC, Verbindungskennung, ID, oder mindestens eine initiale TCP-Sequenznummer, ISN, umfasst;
Analysieren der Nachricht, um die mindestens eine TCP-ISNs oder die QUIC-Verbindungs-ID zu extrahieren;
Abgleichen von Paketquell- und -zieladressen und -ports mit der mindestens einen TCP-ISNs oder der QUIC-Verbindungs-ID; und
Steuern der TCP-Verbindung oder der UDP-Verbindung gemäß dem Ergebnis des Abgleiches.

10. QoEHN (203) nach Anspruch 9, wobei die Nachricht eine Subskriptionsanforderung ist, die mindestens eine TCP-ISN oder die QUIC-Verbindungs-ID umfasst.

11. QoEHN (203) nach Anspruch 9 oder 10, wobei die Nachricht in einer Datenverbindung zwischen dem Server (201) und dem QoEHN gesendet wird.

12. QoEHN (203) nach einem der Ansprüche 9 bis 11, wobei der Prozessor zu Folgendem konfiguriert ist:
Schätzen einer verfügbaren Bandbreite basierend auf einer aktuellen Last und Kanalqualität,
Senden einer CWND-Empfehlungsnachricht an den Server (201), wobei die Nachricht die verfügbare Bandbreite umfasst.

13. Serverseitiges Verfahren (100), umfassend:
Empfangen (101), von einer Netzwerkbenutzereinrichtung, UE (202), einer Netzwerkverbindungsherstellungsanforderung, um eine "Transmission Control Protocol"-, TCP, Verbindung oder eine "User Datagram Protocol"-, UDP, Verbindung herzustellen;
Analysieren (102) der Netzwerkverbindungsherstellungsanforderung, um initiale TCP-Sequenznummern, ISNs, oder eine "Quick User Datagram Protocol"-, QUIC, Verbindungskennung, ID, zu extrahieren; und
Senden (103) der QUIC-Verbindungs-ID oder mindestens einer der TCP-ISNs an einen Erlebnisqualitäts-Hilfsknoten, QoEHN (203) mit Anweisungen zum Steuern der TCP-Verbindung oder der UDP-Verbindung zwischen dem Server (201) und der Netzwerk-UE (202),
wobei die Steuerung der TCP-Verbindung oder der UDP-Verbindung zwischen dem Server (201) und der Netzwerk-UE (202) Abgleichen von Paketquell- und -zieladressen und -ports mit der mindestens einen TCP-ISNs oder der QUIC-Verbindungs-ID und Steuern der TCP-Verbindung oder der UDP-Verbindung gemäß dem Ergebnis des Abgleiches umfasst.

14. Netzwerkbenutzereinrichtungs-, UE, seitiges Verfahren (300), umfassend:
Senden (301) einer Netzwerkverbindungsherstellungsanforderung, um eine "Transmission Control Protocol"-, TCP, Verbindung oder eine "User Datagram Protocol"-, UDP, Verbindung herzustellen, an einen Server (201);
Empfangen, von dem Server (201), einer Netzwerkverbindungsherstellungssequenz von Segmenten;
Analysieren (302) der Netzwerkverbindungsherstellungspaketsequenz, um initiale TCP-Sequenznummern, ISNs, oder eine QUIC-Verbindungs-ID zu extrahieren; und
Senden (303) der QUIC-Verbindungs-ID oder mindestens einer der TCP-ISNs an einen Erlebnisqualitäts-Hilfsknoten, QoEHN (203) mit Anweisungen zum Steuern der TCP-Verbindung oder der UDP-Verbindung zwischen dem Server (201) und der Netzwerk-UE (202),
wobei die Steuerung der TCP-Verbindung oder der UDP-Verbindung zwischen dem Server (201) und der Netzwerk-UE (202) Abgleichen von Paketquell- und -zieladressen und -ports mit der mindestens einen TCP-ISNs oder der QUIC-Verbindungs-ID und Steuern der TCP-Verbindung oder der UDP-Verbindung gemäß dem Ergebnis des Abgleiches umfasst.

15. Verfahren (400) zum Steuern von Verbindungen zwischen einer Netzwerkbenutzereinrichtung, UE (202) und einem Server (201), wobei das Verfahren an einem Erlebnisqualitäts-Hilfsknoten, QoEHN (203) durchgeführt wird, wobei das Verfahren umfasst:
Empfangen (401), von mindestens einem des Servers (201) oder der UE (202), einer Anforderung zum Herstellen einer Steuerung einer Verbindung zwischen dem Server (201) und der UE, wobei die Anforderung mindestens eine der TCP-ISNs oder die QUIC-Verbindungs-ID umfasst;
Analysieren (402) von QUIC-Paketen oder mindestens eines von TCP-SYN-Segmenten und TCP-SYN+ACK-Segmenten in einer Verbindungsherstellungsaustauschsequenz zwischen dem Server (201) und der UE (202), um eine QUIC-Verbindungs-ID oder mindestens eine TCP-ISN zu extrahieren und eine Zuordnung zwischen einer QUIC-Verbindungs-ID oder mindestens einer TCP-ISN und Quell- und Zieladressen und -ports aufzuzeichnen;
Abgleichen (403) zwischen den TCP-ISNs oder der QUIC-Verbindungs-ID der Steuernachricht und Quell- und Zieladressen und -ports eines übermittelten TCP- oder UDP-Pakets; und Steuern (404) der TCP-Verbindung oder der UDP-Verbindung gemäß einem Ergebnis des Abgleiches.

## Revendications

1. Serveur (201), comprenant :
un processeur configuré pour :
recevoir une demande d'établissement de connexion de réseau d'un équipement d'utilisateur de réseau, UE (202), pour établir une connexion de protocole de commande de transmission, TCP, ou une connexion de protocole de datagramme d'utilisateur, UDP ;
analyser la demande d'établissement de connexion de réseau pour extraire les numéros de séquence initiale ISN de TCP, ou un identifiant de connexion, ID, du protocole de datagramme utilisateur rapide, QUIC ; et
envoyer un message comprenant l'ID de connexion QUIC ou au moins l'un des ISN de TCP à un nœud d'assistance de qualité d'expérience, QoEHN, (203) avec des instructions pour commander la connexion TCP ou la connexion UDP entre le serveur (201) et l'UE du réseau (202), la commande de la connexion TCP ou de la connexion UDP entre le serveur (201) et l'UE du réseau (202) comprenant la mise en correspondance des adresses et des ports de source et de destination des paquets avec l'au moins un ISN de TCP ou l'ID de connexion QUIC et la commande de la connexion TCP ou de la connexion UDP en fonction du résultat de la mise en correspondance.

2. Serveur (201) selon la revendication 1, au moins un des ISN de TCP étant extrait d'un segment TCP SYN ou d'un segment TCP SYN+ACK.

3. Serveur (201) selon la revendication 1 ou 2, le processeur étant configuré pour utiliser une adresse de protocole Internet trouvée dans un paquet reçu en provenance de l'UE pour découvrir le QoEHN (203) en utilisant un service de serveur de nom de domaine (201), DNS.

4. Serveur (201) selon l'une des revendications précédentes, le processeur étant configuré pour :
extraire d'un en-tête de requête HTTP un localisateur de ressource uniforme, URL, d'un objet demandé dans la connexion TCP ou la connexion UDP et transformer l'URL en une valeur de hachage en utilisant une fonction de hachage ;
extraire un URL référent d'un objet parent à partir des en-têtes de requête HTTP dans la connexion TCP ou la connexion UDP ;
transformer l'URL du référent en une valeur de hachage en utilisant une fonction de hachage ; et
mettre à jour le QoEHN (203) concernant la taille de l'objet et soit l'URL soit sa valeur de hachage et soit l'URL de l'objet parent soit sa valeur de hachage.

5. Serveur (201) selon l'une des revendications précédentes, le processeur étant configuré pour :
estimer une valeur de taille de fenêtre de congestion initiale optimale (CWND) en fonction d'une capacité de la connexion TCP ou de la connexion UDP et d'un temps de trajet aller-retour, RTT, entre l'UE et le serveur (201), alors que la capacité est reçue dans un message de commande de QoEHN, et
utiliser le CWND pour gérer la connexion TCP ou la connexion UDP.

6. Serveur (201) selon l'une des revendications précédentes, le processeur étant configuré pour :
calculer une valeur appropriée pour un seuil de démarrage lent à utiliser pour gérer la connexion TCP ou la connexion UDP.

7. Client (202), comprenant :
un processeur configuré pour :
envoyer, une demande d'établissement de connexion de réseau à un serveur (201), pour établir une connexion de protocole de commande de transmission, TCP ou une connexion de protocole de datagramme d'utilisateur, UDP ;
recevoir, du serveur (201), une séquence de paquets d'établissement de connexion réseau ;
analyser la séquence de paquets d'établissement de connexion de réseau pour extraire des numéros de séquence initiale ISN de TCP, ou un identifiant de connexion, ID, du protocole de datagramme utilisateur rapide, QUIC ; et
envoyer un message comprenant l'ID de connexion QUIC ou au moins l'un des ISN de TCP à un nœud d'assistance de qualité d'expérience, QoEHN (203), avec des instructions pour commander la connexion TCP ou la connexion UDP entre le serveur (201) et le client (202),
la commande de la connexion TCP ou de la connexion UDP entre le serveur (201) et l'UE du réseau (202) comprenant la mise en correspondance des adresses et des ports de source et de destination des paquets avec l'au moins un ISN de TCP ou l'ID de connexion QUIC et la commande de la connexion TCP ou de la connexion UDP en fonction du résultat de la mise en correspondance.

8. Client (202) selon la revendication 7, les ISN de TCP étant extraits d'un segment TCP SYN+ACK.

9. Noeud d'assistance de qualité d'expérience, QoEHN (203), comprenant :
un processeur configuré pour :
recevoir en provenance d'au moins un serveur (201) ou d'un équipement d'utilisateur de réseau UE (202), un message pour commander une connexion de protocole de commande de transmission, TCP ou de protocole de datagramme d'utilisateur, UDP, entre le serveur (201) et l'équipement d'utilisateur de réseau, UE (202), le message comprenant un identifiant de connexion, ID, de protocole de datagramme d'utilisateur rapide, QUIC, ou au moins un numéro de séquence initial ISN de TCP ;
analyser le message pour extraire l'au moins un ISN de TCP ou l'ID de connexion QUIC ;
faire correspondre les adresses et les ports de source et de destination des paquets à l'au moins un ISN de TCP ou à l'ID de connexion QUIC ; et
commander la connexion TCP ou la connexion UDP en fonction du résultat de la mise en correspondance.

10. QoEHN (203) selon la revendication 9, le message étant une demande d'abonnement comprenant l'au moins un ISN de TCP ou l'ID de connexion QUIC.

11. QoEHN (203) selon les revendications 9 ou 10, le message étant envoyé dans une connexion de données entre le serveur (201) et le QoEHN.

12. QoEHN (203) selon l'une des revendications 9 à 11, le processeur étant configuré pour :
estimer une bande passante disponible en fonction d'une charge et d'une qualité de canal actuelles,
envoyer un message CwndRecommendation au serveur (201), le message contenant la bande passante disponible.

13. Procédé côté serveur (100), comprenant :
la réception (101) en provenance d'un équipement utilisateur de réseau, UE (202), d'une demande d'établissement de connexion de réseau pour établir une connexion de protocole de commande de transmission, TCP ou une connexion de protocole de datagramme d'utilisateur, UDP :
l'analyse (102) de la demande d'établissement de connexion de réseau pour extraire des numéros de séquence initiale ISN de TCP, ou un identifiant de connexion, ID, du protocole de datagramme utilisateur rapide, QUIC ; et
l'envoi (103) de l'ID de connexion QUIC ou d'au moins l'un des ISN de TCP à un nœud d'assistance de qualité d'expérience, QoEHN (203) avec des instructions pour commander la connexion TCP ou la connexion UDP entre le serveur (201) et l'UE du réseau (202),
la commande de la connexion TCP ou de la connexion UDP entre le serveur (201) et l'UE du réseau (202) comprenant la mise en correspondance des adresses et des ports de source et de destination de paquets avec l'au moins un ISN de TCP ou l'ID de connexion QUIC et la commande de la connexion TCP ou de la connexion UDP en fonction du résultat de la mise en correspondance.

14. Procédé (300) côté équipement d'utilisateur de réseau (UE), comprenant :
l'envoi (301) d'une demande d'établissement de connexion de réseau pour établir une connexion de protocole de commande de transmission, TCP ou une connexion de protocole de datagramme d'utilisateur, UDP à un serveur (201) ;
la réception, en provenance du serveur (201), d'une séquence de segments d'établissement de connexion de réseau ;
l'analyse (302) de la séquence de paquets d'établissement de connexion de réseau pour extraire des numéros de séquence initiale ISN de TCP, ou un ID de connexion QUIC ; et
l'envoi (303) de l'ID de connexion QUIC ou d'au moins l'un des ISN de TCP à un nœud d'assistance de qualité d'expérience, QoEHN (203) avec des instructions pour commander la connexion TCP ou la connexion UDP entre le serveur (201) et l'UE du réseau (202),
la commande de la connexion TCP ou de la connexion UDP entre le serveur (201) et l'UE du réseau (202) comprenant la mise en correspondance des adresses et des ports de source et de destination des paquets avec l'au moins un ISN de TCP ou l'ID de connexion QUIC et la commande de la connexion TCP ou de la connexion UDP en fonction du résultat de la mise en correspondance.

15. Procédé (400) pour commander des connexions entre un équipement d'utilisateur de réseau, UE (202) et un serveur (201), le procédé étant réalisé au niveau d'un nœud d'assistance de qualité d'expérience, QoEHN (203), le procédé comprenant :
la réception (401) en provenance d'au moins l'un du serveur (201) ou de l'UE (202), d'une demande pour établir la commande d'une connexion entre le serveur (201) et l'UE, la demande comprenant au moins l'un des ISN de TCP ou l'ID de connexion QUIC ;
l'analyse (402) des paquets QUIC ou d'au moins l'un des segments TCP SYN et des segments TCP SYN+ACK dans une séquence d'échange d'établissement de connexion entre le serveur (201) et l'UE (202) pour extraire un ID de connexion QUIC ou au moins un ISN de TCP et enregistrer une correspondance entre l'ID de connexion QUIC ou au moins un ISN de TCP, et les adresses et ports de source et de destination ;
la mise en correspondance (403) entre les ISN de TCP ou l'ID de connexion QUIC du message de commande et des adresses et ports de source et de destination du paquet TCP ou UDP passant ; et la commande (404) de la connexion TCP ou de la connexion UDP en fonction du résultat de la mise en correspondance.
